# EUROPEAN PATENT SPECIFICATION

(11) **EP 2 799 655 B1**
(45) Date of publication and mention of the grant of the patent: **22.04.2020**
(21) Application number: 14166708.9
(22) Date of filing: 30.04.2014
(51) Int. Cl.: E06B 3/67, C03C 27/10, B32B 17/06, G02F 1/1334

(54) **Improved method of forming switchable glass**
Verbessertes Verfahren zur Herstellung von schaltbarem Glas
Procédé amélioré de fabrication de verre commutable

(30) Priority: 03.05.2013 GB 201308002
(43) Date of publication of application: 05.11.2014
(73) Proprietor: Pro Display TM Limited, Business Park Hoyland Barnsley, South Yorkshire S74 9LH (GB)
(72) Inventor: Beswick, Paul Anthony, Huddersfield, West Yorkshire HD9 7JN (GB)
(74) Representative: Appleyard Lees IP LLP

(56) References cited:
- EP-A2- 0 887 692
- CA-A1- 1 221 446
- US-A- 5 106 441
- US-A1- 2006 164 569
- US-A1- 2006 203 170
- US-A1- 2007 297 710
- US-A1- 2008 153 377
- US-A1- 2009 215 351
- US-A1- 2010 026 662
- US-A1- 2010 277 441
- US-A1- 2010 277 684
- US-A1- 2011 187 960
- US-A1- 2012 200 805

## Description

### FIELD OF INVENTION

The invention relates to an improved method for forming switchable glass in which an electrically switchable layer is bonded to a glass layer.

### BACKGROUND OF THE INVENTION

Switchable glass comprises an electrically switchable layer, one such example of an electrically switchable layer is a polymer dispersed liquid crystal (PDLC) layer, although it will be understood there are a range of different types of electrically switchable layers.

In a PDLC layer, liquid crystals are dissolved or dispersed into a liquid polymer. Without voltage applied, the liquid crystals are randomly arranged in droplets. The droplets cause light to be scattered as it passes through the PDLC layer, and causes a translucent appearance. When a voltage is applied, an electric field which is formed causes the liquid crystals to align, allowing light to pass through the droplets with very little scattering and resulting in a transparent state.

To form a switchable glass the PDLC layer is typically bonded between two Glass layers. It is known to bond these layers together by applying a bonding agent such as an EVA adhesive and curing the glass layup in an autoclave. Undesirably, this process is expensive since it requires an autoclave, together with the high energy consumption of the autoclave. Furthermore, the PDLC layer is made to be smaller than the glass layers such that the glass layers overlap the PDLC layer. The overlapping regions of the glass layers are bonded by the bonding agent to fix the glass layup together. This results in a large region around the periphery of the glass layup where the PDLC layer does not extend.

Alternatively, bonding can be achieved by the application of a self-adhesive film to the PDLC layer which is in turn placed on the glass layer. However, when positioned on the glass layer, the adhesive PDLC layer requires precise alignment in the first instance since it instantly adheres to the glass layer. Moreover, the quality of the bond is often less than that achieved by means of the former process.

US 2010/0277441 discloses a security element for the identification of a security document using a liquid crystal display device.

It is an object of the invention to overcome one of the above or other problems associated with prior art processes for forming switchable glass.

### SUMMARY OF THE INVENTION

According to a first aspect of the invention there is provided a method of forming an electrically switchable layup, the method comprising:
bonding a substrate layer to an electrically switchable layer by applying a UV curable adhesive to the substrate layer and/or the electrically switchable layer, placing the layers together, and curing the adhesive, by means of a UV source, to thereby bond the substrate layer and electrically switchable layer together;
characterised in that the electrically switchable layer is a polymer dispersed liquid crystal (PDLC) layer which is operable to move from substantially optically transparent state with voltage applied, to a substantially translucent/opaque state without voltage applied, wherein the PDLC layer comprises a liquid crystal polymer layer arranged between two PET (Polyethylene terephthalate) plastic layers, which plastic layers comprise a ITO (Indium tin oxide) conductive coating,
wherein the substrate layer is a glass layer or a transparent plastic layer,
wherein the adhesive is a methacrylic ester based adhesive;
wherein the method comprises, prior to curing, a step of applying pressure in the through thickness direction to the layup of the substrate layer and electrically switchable layer.

Preferably, the substrate layer is an acrylic.

Preferably, the adhesive is applied as a spray, preferably the adhesive is heated before spraying to reduce its viscosity for improved application.

Preferably, the method comprises a step of curing adhesive by arranging the UV source to transmit UV light to the adhesive through the electrically switchable layer and/or the substrate layer. Preferably, the adhesive is substantially optically transparent when cured.

Preferably, the glass layer is substantially optically transparent and is preferably composed primarily of silica. It will be appreciated that since the method does not require the application of heat as part of the bonding process it is compatible with all types of glass/glass laminates such as those which are sensitive to heat.

Preferably, the method comprises, prior to curing, applying a liner material to the electrically switchable layer and/or the substrate layer. Preferably, the liner material is paper based. Preferably, the liner material is dispensed from a roll positioned adjacent the substrate layer and/or the electrically switchable layer.

Preferably, the method comprising, prior to curing, a step applying pressure in the through thickness direction to the layup of the substrate layer and electrically switchable layer, is through the liner material such that the adhesive is evenly distributed prior to curing.

Preferably, the step of applying pressure comprises using a roller which is moved over a substantial portion of the electrically switchable layer and/or the substrate layer. Preferably, the roller applies a constant pressure of approximately 2-4 Bar, or more preferably about 3 Bar.

Preferably, the roller is arranged adjacent the layup and preferably moves over the layup in a single pass. Preferably, the roller is moved by hand or is automated, and preferably comprises a mounting means configured to apply the constant force. Preferably the mounting means comprises a hydraulic support arranged between the roller and a jig for supporting the roller. Preferably, the roller is wider than a width of the layup. Advantageously, using narrower rollers can be avoided which cause uneven distribution of the adhesive. Preferably, the jig comprises a light source to aid visibility during rolling.

Preferably, the step of curing the adhesive by means of a UV source comprises arranging the uncured layup in an enclosure which comprises one or more UV sources. Preferably, the UV sources are configured to emit longwave UV light.

Preferably, prior to curing, the method comprises a step of removing the liner material.

Preferably, prior to curing, the method comprises a step of cleaning the UV curable resin preferably by means of an isopropyl alcohol solution.

Preferably, the substrate layer is about 1mm-10cm thick. Preferably, the electrically switchable layer is about 0.5mm thick.

According to a second aspect of the invention there is provided an electrically switchable layup comprising:
a substrate layer;
an electrically switchable layer;
wherein the substrate layer is bonded to the electrically switchable layer by means of a UV curable adhesive; and
characterised in that the electrically switchable layer is a polymer dispersed liquid crystal (PDLC) layer which is operable to move from substantially optically transparent state with voltage applied, to a substantially translucent/opaque state without voltage applied,
wherein the PDLC layer comprises a liquid crystal polymer layer arranged between two PET (Polyethylene terephthalate) plastic layers, which plastic layers comprise a ITO (Indium tin oxide) conductive coating,
wherein the substrate layer is a glass layer or a transparent plastic layer,
wherein the adhesive is a methacrylic ester based adhesive.

A method in accordance with the first aspect of the invention is used to construct a core product which can optionally be formed into several different further products, several examples of which are given in the third and fourth aspects of the invention.

According to a third aspect of the invention there is provided a method of forming a laminate comprising an electrically switchable layup, the method comprising:
bonding a substrate layer to an electrically switchable layer in accordance with the first aspect of the invention;
arranging one or more separating members between the electrically switchable layer and a transparent layer to define a cavity.

Preferably, the transparent layer comprises a glass or plastic such as an acrylic.

Preferably, the separating members are arranged at a periphery of the electrically switchable layer and/or the transparent layer.

Preferably, the separating members are bonded to the transparent layer and/or electrically switchable layer by means of an adhesive. Preferably, the separating members are made from a double sided adhesive tape, which is preferably 1-2mm in thickness and 3-6mm in width. Accordingly, the separating members separate the substrate layer and transparent layer to define a cavity which has the thickness of the separating members. Preferably, the separating members are made from an optically transparent material, preferably an acrylic tape.

Optionally, the separating members comprise a continuous element in the form of a gasket or the like. However, in a preferred example the separating members comprise separate strips which are assembled to form a gasket. Preferably, the separating members are operable to seal the cavity.

Preferably, the cavity is for receiving a resin, and the method preferably includes a step of filling the cavity with a resin to form a resin layer.

Preferably, the resin is curable at room temperature (between 0-30°C) but is optimally curable at between 20-25°C, over the period of about 24 hours. More particularly, the resin comprises a polyester resin a styrene. Preferably, the resin comprises a catalyst preferably comprising liquid organic peroxides. Preferably, the resin comprises an adhesion promoter which preferably comprises methacryloxypropyltrimethoxysilane. Preferably, the resin comprises a hardener which preferably comprises methylethylketoneperoxide. Preferably, the resin is optically transparent.

Advantageously, it has been found that such a resin, when cured exhibits low shrinkage, and thus applies low stress to the electrically switchable layer in comparison to a UV curable adhesive, or an adhesive which is cured in an autoclave. It has been found that it is desirable to limit the stress applied by the resin to the electrically switchable layer because high stress can cause delamination of the electrically switchable layer and subsequent damage or failure.

Optionally, the resin comprises a dye such that the dye applies a colour to the resin layer. Preferably, the concentration of the dye is varied to adjust the shade of the coloured resin layer. Preferably, the dye is polyester based. Alternatively the resin layer is substantially clear.

Preferably, the separating members are configured to define an opening through which the resin can be poured. Preferably, the opening is defined by arranging a lining material between a portion of the separating members and the substrate layer or the transparent layer, such that at the opening the portion of the separating members is not bonded to the substrate layer or the transparent layer. Preferably, the separating members are compliant such that the substrate layer and transparent layer can be perturbed in the thickness direction to allow the insertion of a funnel into the cavity via the opening for filling of the cavity with the resin.

Preferably, after filling of the cavity the opening is sealed by removal of the lining material.

Preferably, the transparent layer and separating members are fixed to the substrate layer and electrically switchable layer of the first aspect when in a first position in which the plane of the layers is substantially horizontally aligned, thereafter the layers are reoriented such that they are in a second position in which the resin can flow into the cavity via the opening and fill the cavity under the effect of gravity.

Preferably, in the second position the plane of the layers is orientated to be about 20-30° to a horizontal plane, alternatively the plane may be orientated at any suitable angle. Preferably, the laminate is moved from the first position to a second position by means of a pivotally mounted support. Preferably, the support is pivoted through 20-30° from the first to the second position.

Preferably, at a portion of the separating members, which comprises a vertex, an aperture is made, wherein the aperture is operable to release air from the cavity as it is filled with resin. Preferably, after filling the cavity the apertures are sealed, preferably by a silicon seal.

Preferably, during filling of the cavity, the periphery of the separating members is sealed, preferably by means of a foil tape, to retain any resin which may escape from the cavity.

Preferably, during filling of the cavity, any trapped air bubbles are removed from the cavity by inserting a needle of a syringe through the separating members and into the bubble such that the air of the bubble can be extracted from the cavity via the needle.

According to a fourth aspect of the invention there is provided a method of forming switchable double glazed material, the method comprising:
bonding a substrate layer to an electrically switchable layer in accordance with the first aspect of the invention;
arranging one or more separating members between the substrate layer and a transparent layer to define a cavity.

Preferably, the separating members comprise a frame, preferably composed of an aluminium and plastic material which is preferably arranged at a periphery of the electrically switchable layer. Preferably, the separating members are about 2-40mm thick. Accordingly, the separating members separate the substrate layer and transparent layer to define a cavity which has the thickness of the separating members.

Preferably, the separating members are fixed to the transparent layer and/or the electrically switchable layer by means of an adhesive. Preferably the adhesive comprises a double sided tape.

Preferably, a sealing member is arranged on a periphery of the double glazed material to seal the cavity. Optionally, the sealing member is a silicon seal. Optionally, the sealing member is a rubber, preferably a butyl rubber. Preferably, the separating members and/or electrically switchable layer are offset from the substrate layer and transparent layer to define a channel for receiving the sealing member.

Preferably, the cavity is filled with an inert gas, such as argon. Preferably, the inert gas is inserted into the cavity through the sealing member.

It will be appreciated that to form additional layers of glazing further transparent layers can be added, in the manner described above, to the substrate layer and/or the transparent layer.

According to a fifth aspect of the invention there is provided a door panel comprising a transparent switchable layup formed by a method in accordance with the first, third or fourth aspect of the invention. Preferably, the layup is located in an aperture of the door panel. Preferably, the door panel comprises a control unit having a power supply operable to supply power to the electrically switchable layer such as a battery, and/or the control unit is operable to receive power from an external source, such as a mains electrical supply. Preferably, the control unit comprises a switch for actuating the electrically switchable layer from an optically transparent state to a non-optically transparent state. Preferably, the control unit is arranged between a first and second exterior panel of the door.

All of the features described herein may be combined with any of the above aspects, in any combination.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Figure 1 shows a side cross-sectional view of switchable glass according to an exemplary embodiment of the invention;
Figure 2 shows a process of applying pressure to the switchable glass of figure 1;
Figure 3 shows a process of applying UV light to the switchable glass of figure 1;
Figure 4 shows a side cross-sectional view of a switchable glass according to a further exemplary embodiment of the invention;
Figure 5 shows a side cross-sectional view of a switchable glass according to a yet further exemplary embodiment of the invention;
Figure 6 shows a side view of a jig for moving the switchable glass of figure 5;
Figure 7 shows a door comprising a switchable glass according to the exemplary embodiments of the invention.

### DETAILED DESCRIPTION OF THE EXEMPLARY EMBODIMENTS

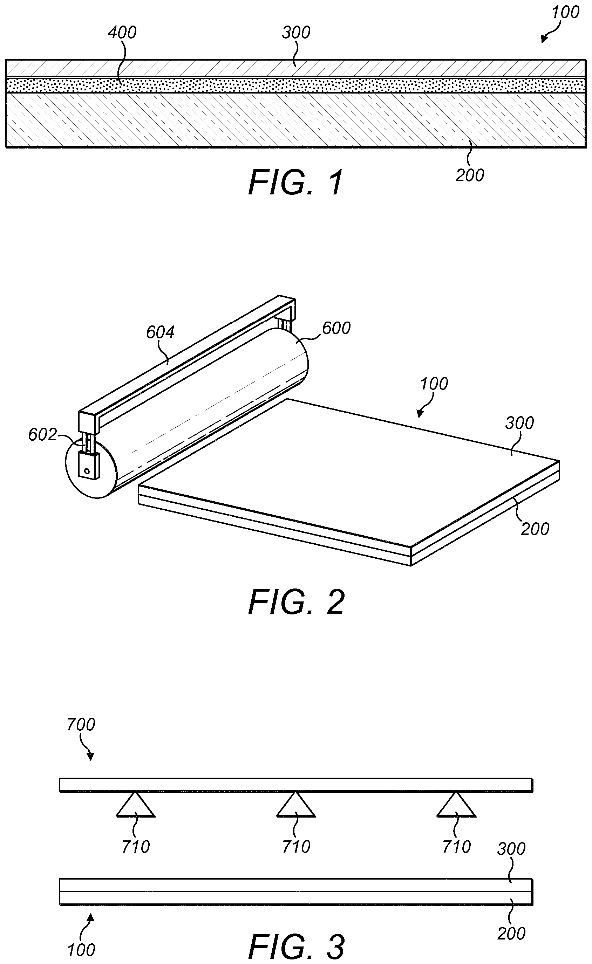

Figure 1 shows stage of a method of forming switchable glass 100 comprising an electrically switchable layer. In the exemplary embodiments shown herein the electrically switchable layer comprises a PDCL layer, however it will be appreciated that other suitable types of electrically switchable material may be used.

In the embodiment of figure 1 a substrate layer, which in this example is a glass layer 200, is bonded to a PDLC layer 300 by means of a UV curable adhesive 400. In this embodiment the adhesive 400 comprises a methacrylic ester based adhesive, although it will be appreciated that other suitable UV curable adhesives can be used. It will be appreciated that prior to curing, the adhesive 400 can be applied to a bonding surface or either or both of the glass layer 200 and the PDLC layer 300. According to a preferred embodiment it is applied to the glass layer 200 by means of a spray.

Following application of the adhesive 400, the PDLC layer 300 is positioned on top of the glass layer 200 such that the adhesive is arranged between their adjoining surfaces. According to a preferred embodiment, this stage of the process is performed whilst the layers 200, 300 are substantially horizontally arranged.

Subsequently, an exterior surface of the PDLC layer and/or the glass layer 200 is/are covered with a protective liner 500 (not shown). According to an exemplary embodiment the liner 500 is a paper based material, and is dispensed on to the exterior of the PDLC layer via a roll which is arranged adjacent the layers.

Thereafter, pressure is applied to an exterior surface of the PDLC layer and/or the glass layer 200 to cause a compressive stress in the through thickness direction. According to a preferred embodiment the pressure is applied by means of a roller 600 as shown in figure 2 to the protective liner 500 on the PDLC layer 300. The roller 600 is mounted by hydraulic actuators 602 to a jig 604. The hydraulic actuators 602 allow the roller to move up and down under the application of 3 Bar of pressure, and the jig 604 movably supports the roller such that it can be manually moved over the layers. It will be appreciated that the actuators may also be pneumatic. The roller 600 requires a single pass over the layers and is generally wider than the layers. It will be appreciated that other suitable means for applying pressure to the layup can be used. The application of pressure to the layup has the effect of uniformly distributing the adhesive 400 over the adjoining layers, such that the optical properties of the layup are substantially uniform, and an adequate bond is achieved between the two layers. As part of the pressure application process excess adhesive may be expelled from proximate the adjoining surfaces at a periphery of the layup, and removed.

The liner 500 is next removed and the layers 200, 300 are cleaned in isopropyl alcohol solution. The layup is then cured by means of UV light. More specifically, it is placed in an enclosure 700 as shown in figure 3. A UV source 710, which in this embodiment comprises a plurality of longwave UV lights is used to apply UV light to the adhesive 400 to effect its curing. Since the laminate is optically transparent, the UV light can be applied on either or both sides of the layers. However, in this example UV light is applied on the side of the PDLC layer. Thereafter, the switchable glass 100 is removed from the enclosure 700.

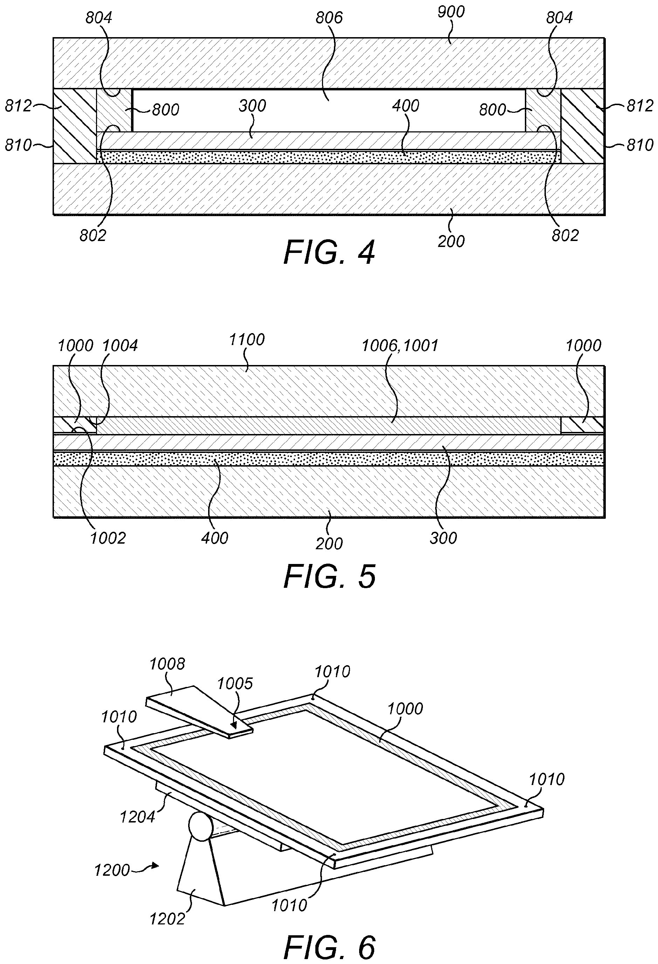

The aforementioned process defines a core product which can be formed in to a variety of subsequent products. One such example is shown in the embodiment of figure 4, wherein a double glazed switchable glass is formed. In this embodiment a first side 802 of separating member 800 is fixed to the exterior surface of the PDLC layer 300 by means of a double sided tape. The separating members 800 comprises a frame which is between 5-20mm thick and is formed from a mixture of aluminium and plastic. Thereafter, a second glass layer 900 is positioned on top of and fixed, by means of double sided tape, to a second side 804 of the separating members 800. For convenience, the separating members 800 and second glass layer 900 are assembled onto the layup of figure 1 whilst the layers are arranged in a substantially horizontal plane.

As shown in figure 4 the separating members 800 are positioned around the periphery of the PDLC layer 300. In this way a cavity 806 which has the thickness of the separating members 800 is defined by a face of the PDLC layer and a face of the second glass layer 900.

In this embodiment the periphery of the PDLC layer 300 is offset from the periphery of the glass layer 200 and second glass layer 900. In this way a channel 810 is formed which has sides defined by the glass layer 300 and second glass layer 900, and a base defined by the separating member 800 and PDLC layer 300. Within the channel 810 a sealing member 812 is applied to seal the cavity 806. In this embodiment the sealing member 812 comprises a butyl rubber sealant or a silicon sealant, although it will be appreciated that other suitable sealants can be used.

The cavity 806 can be purged with an inert gas such as argon. This is achieved by injecting the gas through the sealing member 812 and purging the air from the cavity 806 with the inert gas.

To form triple and quadruple glazed switchable glass, the above process is repeated, for instance, further separating members are arranged on the exterior surface of glass layer 200, 900 and a further glass layer is position on the separating members.

An alternative product which can be formed from the core product of figure 1 is shown in figure 5. In this embodiment a laminate which is clear or coloured is formed that comprises an electrically switchable layer.

A separating member 1000 in the form of a double sided, optically transparent, acrylic tape is fixed to the periphery of the PDLC layer 200 at a first side 1002 of the separating member 1000.

A second glass layer 1100 is then fixed to a second side 1004 of the separating member 1000. It will be appreciated that other suitable separating members may be used, and that the separating member could alternatively be fixed to the second glass layer first.

The separating members 1000 define a sealed cavity 1001 which is between 0.5-2.5mm thick, for receiving a resin 1005. As best seen in figure 6, a portion of the separating members 1000 is left un-bonded to the second glass layer 1100 to define an opening 1005, through which a resin 1006 is poured into the cavity 1001. In more detail, the opening is about 2-14cm long, such that it is suitable for receiving a funnel 1008 for transfer of the resin 1006 into the cavity 1002. The un-bonded portion is achieved by positioning a lining material which is left on the separating members at the opening. The separating members 1000 are also compliant such that the layers 200, 300 and second glass layer 1100 can be perturbed in the through thickness direction to aid insertion of the funnel 1008 at the opening 1005 and subsequent filling.

In this embodiment the resin is a cold poured resin. In more detail the resin 1006 comprises a mixture of a polyester resin in styrene. The resin comprises a liquid organic peroxide catalyst to aid curing. The resin comprises methacryloxypropyltrimethoxysilane to improve adhesion and methylethylketoneperoxide to improve hardening.

For convenience the laminate is assembled whilst the layers are arranged in a substantially horizontal plane, hence in a first position. Thereafter, the assembled laminate is rotated through substantially 22.5 degrees such that it is orientated with the opening 1004 on the top edge, hence in a second position. In this position the resin 1006 can be poured into the cavity 1001 under the influence of gravity. It will be appreciated that in the second position the laminate can be angled at any angle relative to the horizontal which is sufficient to permit the resin 1006 to flow into the cavity 1001 under gravity.

In a preferred embodiment, the laminate is moved between the first and second position by means of a jig 1200, as shown in figure 6. The jig 1200 comprises a stationary portion 1202 which abuts the ground and a mounting portion 1204 for holding the laminate. The mounting portion 1204 is pivotally supported to the stationary portion 1202 to provide the required range of movement.

As the cavity 1001 is filled, air in the cavity is allowed to escape from pin-sized apertures 1010, through the separating members 1000, which are arranged on vertexes of the separating members 1000. These apertures 1010 are subsequently sealed with silicon once the cavity has been filled. Any trapped air bubbles may be removed by inserting a needle of a syringe through the separating members 1000 into the bubbles, and extracting the air via the needle.

Following filling of the cavity, the resin is allowed to cure. Advantageously, it has been found that the particular resin when cured exhibits low shrinkage, and thus applies low stress to the electrically switchable layer in comparison to a UV curable resin, or a resin which is cured in an autoclave. It has been found that it is desirable to limit the stress applied by the resin to the electrically switchable layer because high stress can cause delamination which can damage the electrically switchable layer.

To colour the laminate a dye can be mixed into the resin prior to pouring the resin 1006 into the cavity 1002. An example of a suitable dye is a polyester based dye. However, if such a dye is not added it will be appreciated that the laminate is not coloured.

The opening 1005 may then be sealed by removing the lining material from the separating members 1000 such that the un-bonded portion of the separating members bonds to the second glass layer 1100.

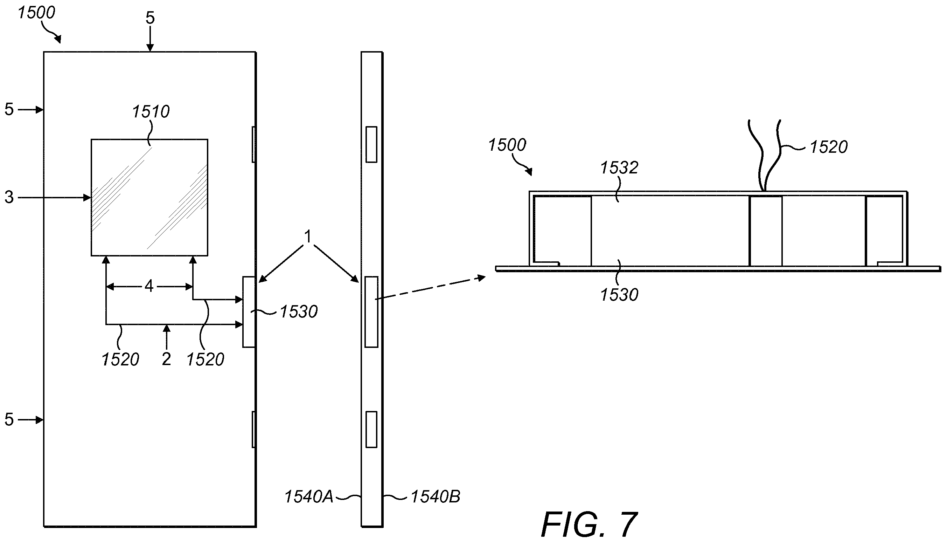

The aforementioned switchable glasses can be made into a door. Figure 7 shows an example door 1500 which comprises an aperture 1510 filled with one of the aforementioned switchable glasses recording to the invention. Power cables 1520 connect the PDLC layer 300 to a control until 1530 which is positioned between the outer panels 1540A, B of the door. The control until 1530 comprises a battery 1532 and switch 1534 (not shown) to actuate the PDLC layer between an optionally transparent and non-transparent state. Alternatively or additionally the control unit may be operable to receive power from a mains electrical supply.

Although in the above exemplary embodiments the first and second glass layers have been described as being made of glass, it will be appreciated that they may alternatively be made of other transparent materials such as plastic.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of forming an electrically switchable layup, the method comprising:
(a) bonding a substrate layer to an electrically switchable layer by applying a UV curable adhesive to the substrate layer and/or the electrically switchable layer, placing the layers together, and curing the adhesive, by means of a UV source, to thereby bond the substrate layer and electrically switchable layer together;
**characterised in that** the electrically switchable layer is a polymer dispersed liquid crystal (PDLC) layer which is operable to move from substantially optically transparent state with voltage applied, to a substantially translucent/opaque state without voltage applied, wherein the PDLC layer comprises a liquid crystal polymer layer arranged between two PET (Polyethylene terephthalate) plastic layers, which plastic layers comprise a ITO (Indium tin oxide) conductive coating,
wherein the substrate layer is a glass layer or a transparent plastic layer,
wherein the adhesive is a methacrylic ester based adhesive;
wherein the method comprises, prior to curing, a step of applying pressure in the through thickness direction to the layup of the substrate layer and electrically switchable layer.

2. An electrically switchable layup comprising:
a substrate layer; and
an electrically switchable layer;
wherein the substrate layer is bonded to the electrically switchable layer by means of a UV curable adhesive; and
**characterised in that** the electrically switchable layer is a polymer dispersed liquid crystal (PDLC) layer which is operable to move from substantially optically transparent state with voltage applied, to a substantially translucent/opaque state without voltage applied,
wherein the PDLC layer comprises a liquid crystal polymer layer arranged between two PET (Polyethylene terephthalate) plastic layers, which plastic layers comprise a ITO (Indium tin oxide) conductive coating,
wherein the substrate layer is a glass layer or a transparent plastic layer,
wherein the adhesive is a methacrylic ester based adhesive.

3. A method of forming a laminate comprising an electrically switchable layup, the method comprising:
(a) bonding a substrate layer to an electrically switchable layer in accordance with the method of claim 1; and
(b) arranging one or more separating members between the electrically switchable layer and a transparent layer to define a cavity.

4. A method according to claims 3, wherein the separating members are operable to seal the cavity.

5. A method according to claim 3, wherein the method includes a step of filling the cavity with a resin to form a resin layer.

6. A method of forming switchable double glazed material, the method comprising:
(a) bonding a substrate layer to an electrically switchable layer in accordance with the method of claim 1; and
(b) arranging one or more separating members between the substrate layer and a transparent layer to define a cavity.

7. A method according to claim 6, wherein a sealing member is arranged on a periphery of the double glazed material to seal the cavity.

8. A door panel comprising a transparent switchable layup formed by a method in accordance with any of claims 1 or 3-7.

9. A door panel according to claim 8, wherein the door panel comprises a control unit having a power supply operable to supply power to the electrically switchable layer such as a battery, and/or the control unit is operable to receive power from an external source, such as a mains electrical supply.

10. A door panel according to claim 9, wherein the control unit comprises a switch for actuating the electrically switchable layer from an optically transparent state to a non-optically transparent state.

11. A door panel according to claims 9 or 10 wherein the control unit is arranged between a first and second exterior panel of the door.

## Patentansprüche

1. Verfahren zum Ausbilden eines elektrisch schaltbaren Layup, wobei das Verfahren umfasst:
(a) Bonden einer Substratschicht an eine elektrisch schaltbare Schicht durch Aufbringen eines UV-härtbaren Klebers auf die Substratschicht und/oder die elektrisch schaltbare Schicht, Platzieren der Schichten beieinander und Härten des Klebers mit Hilfe einer UV-Quelle, um dadurch die Substratschicht und die elektrisch schaltbare Schicht aneinander zu bonden;
**dadurch gekennzeichnet, dass** die elektrisch schaltbare Schicht eine PDLC(Polymer Dispersed Liquid Crystal)-Schicht ist, die betätigt werden kann, um sich von dem im Wesentlichen optisch transparenten Zustand bei angelegter Spannung zu einem im Wesentlichen durchscheinenden/undurchsichtigen Zustand ohne angelegte Spannung zu bewegen, wobei die PDLC-Schicht eine Flüssigkristallpolymerschicht umfasst, die zwischen zwei PET(Polyethylenterephthalat)-Kunststoffschichten angeordnet ist, wobei die Kunststoffschichten eine leitfähige ITO(Indiumzinnoxid)-Beschichtung umfassen,
wobei die Substratschicht eine Glasschicht oder eine transparente Kunststoffschicht ist,
wobei der Kleber ein auf Methacrylester basierender Kleber ist;
wobei das Verfahren vor dem Härten einen Schritt des Aufbringens von Druck in der Durchdickenrichtung auf das Layup der Substratschicht und der elektrisch schaltbaren Schicht umfasst.

2. Elektrisch schaltbares Layup, umfassend:
eine Substratschicht; und
eine elektrisch schaltbare Schicht;
wobei die Substratschicht mit Hilfe eines UV-härtbaren Klebers an die elektrisch schaltbare Schicht gebondet ist; und
**dadurch gekennzeichnet, dass** die elektrisch schaltbare Schicht eine PDLC(Polymer Dispersed Liquid Crystal)-Schicht ist, die betätigt werden kann, um sich von dem im Wesentlichen optisch transparenten Zustand bei angelegter Spannung zu einem im Wesentlichen durchscheinenden/undurchsichtigen Zustand ohne angelegte Spannung zu bewegen, wobei die PDLC-Schicht eine Flüssigkristallpolymerschicht umfasst, die zwischen zwei PET(Polyethylenterephthalat)-Kunststoffschichten angeordnet ist, wobei die Kunststoffschichten eine leitfähige ITO(Indiumzinnoxid)-Beschichtung umfassen,
wobei die Substratschicht eine Glasschicht oder eine transparente Kunststoffschicht ist,
wobei der Kleber ein auf Methacrylester basierender Kleber ist.

3. Verfahren zum Ausbilden eines ein elektrisch schaltbares Layup umfassenden Laminats, wobei das Verfahren umfasst:
(a) Bonden einer Substratschicht an eine elektrisch schaltbare Schicht gemäß dem Verfahren von Anspruch 1; und
(b) Anordnen von einem oder mehreren trennenden Gliedern zwischen der elektrisch schaltbaren Schicht und einer transparenten Schicht, um einen Hohlraum zu definieren.

4. Verfahren nach Anspruch 3, wobei die trennenden Glieder betätigt werden können, um den Hohlraum abzudichten.

5. Verfahren nach Anspruch 3, wobei das Verfahren einen Schritt des Füllens des Hohlraums mit einem Harz beinhaltet, um eine Harzschicht zu bilden.

6. Verfahren zum Ausbilden eines schaltbaren doppelt verglasten Materials, wobei das Verfahren umfasst:
(a) Bonden einer Substratschicht an eine elektrisch schaltbare Schicht gemäß dem Verfahren von Anspruch 1; und
(b) Anordnen von einem oder mehreren trennenden Gliedern zwischen der Substratschicht und einer transparenten Schicht, um einen Hohlraum zu definieren.

7. Verfahren nach Anspruch 6, wobei ein Abdichtglied an einer Peripherie des doppelt verglasten Materials angeordnet ist, um den Hohlraum abzudichten.

8. Türblatt umfassend ein durch ein Verfahren gemäß einem der Ansprüche 1 oder 3-7 gebildetes transparentes schaltbares Layup.

9. Türblatt nach Anspruch 8, wobei das Türblatt eine Steuereinheit mit einer Stromversorgung umfasst, die betätigt werden kann, um Strom an die elektrisch schaltbare Schicht zu liefern, wie etwa eine Batterie, und/oder die Steuereinheit betätigt werden kann, um Strom von einer externen Quelle wie etwa einer Netzversorgung zu empfangen.

10. Türblatt nach Anspruch 9, wobei die Steuereinheit einen Schalter zum Betätigen der elektrisch schaltbaren Schicht von einem optisch transparenten Zustand zu einem nicht-optisch transparenten Zustand umfasst.

11. Türblatt nach Anspruch 9 oder 10, wobei die Steuereinheit zwischen einem ersten und zweiten äußeren Blatt der Tür angeordnet ist.

## Revendications

1. Procédé de formation d'une superposition commutable électriquement, le procédé consistant à :
(a) lier une couche de substrat à une couche commutable électriquement en appliquant un adhésif durcissable aux UV sur la couche de substrat et/ou la couche commutable électriquement, placer les couches ensemble, et durcir l'adhésif, au moyen d'une source d'UV, pour de ce fait lier la couche de substrat et la couche commutable électriquement ensemble ;
**caractérisé en ce que** la couche commutable électriquement est une couche de cristaux liquides dispersés dans un polymère (PDLC) qui est exploitable pour passer d'un état sensiblement optiquement transparent avec une tension appliquée, à un état sensiblement translucide/opaque sans tension appliquée, dans lequel la couche PDLC comprend une couche de polymère à cristaux liquides agencée entre deux couches en plastique PET (polyéthylène téréphtalate), lesquelles couches en plastique comprennent un revêtement conducteur en ITO (oxyde d'indium-étain), dans lequel la couche de substrat est une couche de verre ou une couche en plastique transparent,
dans lequel l'adhésif est un adhésif à base d'ester méthacrylique ;
le procédé comprenant, avant le durcissement, une étape consistant à appliquer une pression dans le sens de l'épaisseur traversante sur la superposition de la couche de substrat et de la couche commutable électriquement.

2. Superposition commutable électriquement comprenant :
une couche de substrat ; et
une couche commutable électriquement ;
dans laquelle la couche de substrat est liée à la couche commutable électriquement au moyen d'un adhésif durcissable aux UV ; et
**caractérisée en ce que** la couche commutable électriquement est une couche de cristaux liquides dispersés dans un polymère (PDLC) qui est exploitable pour passer d'un état sensiblement optiquement transparent avec une tension appliquée, à un état sensiblement translucide/opaque sans tension appliquée,
dans laquelle la couche PDLC comprend une couche de polymère à cristaux liquides agencée entre deux couches en plastique PET (polyéthylène téréphtalate), lesquelles couches en plastique comprennent un revêtement conducteur en ITO (oxyde d'indium-étain),
dans laquelle la couche de substrat est une couche de verre ou une couche en plastique transparent,
dans laquelle l'adhésif est un adhésif à base d'ester méthacrylique.

3. Procédé de formation d'un stratifié comprenant une superposition commutable électriquement, le procédé consistant à :
(a) lier une couche de substrat à une couche commutable électriquement conformément au procédé selon la revendication 1 ; et
(b) agencer un ou plusieurs éléments de séparation entre la couche commutable électriquement et une couche transparente pour définir une cavité.

4. Procédé selon la revendication 3, dans lequel les éléments de séparation sont exploitables pour fermer hermétiquement la cavité.

5. Procédé selon la revendication 3, le procédé comprenant une étape consistant à remplir la cavité avec une résine pour former une couche de résine.

6. Procédé de formation d'un matériau double vitrage commutable, le procédé consistant à :
(a) lier une couche de substrat à une couche commutable électriquement conformément au procédé selon la revendication 1 ; et
(b) agencer un ou plusieurs éléments de séparation entre la couche de substrat et une couche transparente pour définir une cavité.

7. Procédé selon la revendication 6, dans lequel un élément d'étanchéité est agencé sur une périphérie du matériau double vitrage pour fermer hermétiquement la cavité.

8. Panneau de porte comprenant une superposition commutable transparente formée par un procédé selon l'une quelconque des revendications 1 ou 3 à 7.

9. Panneau de porte selon la revendication 8, le panneau de porte comprenant une unité de commande possédant un bloc d'alimentation exploitable pour alimenter en courant la couche commutable électriquement, tel qu'une batterie, et/ou l'unité de commande est exploitable pour recevoir du courant en provenance d'une source externe, telle qu'une alimentation électrique du secteur.

10. Panneau de porte selon la revendication 9, dans lequel l'unité de commande comprend un commutateur pour actionner la couche commutable électriquement depuis un état optiquement transparent vers un état optiquement non transparent.

11. Panneau de porte selon la revendication 9 ou 10, dans lequel l'unité de commande est agencée entre un premier et un second panneau extérieur de la porte.
